# EUROPEAN PATENT SPECIFICATION

(11) **EP 2 919 936 B1**
(45) Date of publication and mention of the grant of the patent: **14.06.2017**
(21) Application number: 14843195.0
(22) Date of filing: 01.08.2014
(51) Int. Cl.: B23D 61/18, B24B 7/06, B28D 1/08

(54) **SAW WIRE HAVING ASYMMETRICAL CRIMPS**
SÄGEDRAHT MIT ASYMMETRISCHEN ZACKEN
FIL DE SCIE AYANT DES ONDULATIONS ASYMÉTRIQUES

(30) Priority: 04.02.2014 KR 20140012785
(43) Date of publication of application: 23.09.2015
(73) Proprietor: Hongduk Industrial Co. Ltd., Pohang-si, Gyeongsangbuk-do 790-240 (KR)
(72) Inventor: LIM, Seung Ho, Gyeongju-si, Gyeongsangbuk-do 780-772 (KP)
(74) Representative: Steiniger, Carmen
(86) International application number: PCT/KR2014/007142
(87) International publication number: WO 2015/119343

(56) References cited:
- JP-A- 2000 288 901
- JP-A- 2001 205 551
- JP-A- 2004 276 207
- JP-A- 2012 121 101
- JP-A- 2012 139 743

## Description

### TECHNICAL FIELD

The inventive concept relates to a saw wire having asymmetrical crimps, and more particularly, to a saw wire having asymmetrical crimps which enhance the feeding capability of a cutting material, improve the cutting speed by enhancing the retentiveness of the cutting material, prevent a qualitative drop on a surface of a material to-be-cut by smoothly discharging cutting scrap, and reduce a defect rate and thus enhance the productivity of a final product such as a wafer.

### BACKGROUND ART

A saw wire used in a saw machine, in general, cuts a material to-be-cut, while the saw wire moves in contact with the material to-be-cut at a proper pressure, along with the cutting material where grinding particles, such as silicon carbide powder, diamond powder, etc., and oil, etc. are mixed.

A method of cutting a hard material such as a silicon block by using the saw wire is as follows: The saw wire is wound along a plurality of grooves in a plurality of rollers, and rows of the saw wire are driven with a specific force applied to the silicon block, or a material to-be-cut. At this stage, grinding particles are supplied between rows of the saw wire and the material to-be-cut to cut the silicon block into wafers due to the cutting effect of the grinding particles. The efficiency of a cutting process and the thickness quality of wafers depend on several factors such as characteristics of a hard material undergoing cutting and a speed of the saw wire. The most important factor among these is an amount of the cutting material which may be included with the saw wire.

Each row of the saw wire used for cutting the silicon block is conventionally wound on rollers for 1,000 to 3,000 times. Such a wire moves along grooves prepared on rollers to cut hard material, and while hard material is cut, cutting material grinds not only hard material but also the saw wire and reduces the thickness of the saw wire, which is a problem. At the beginning of cutting, a lot of cutting material may be accompanied by a plating layer of soft material existing on the surface of the saw wire; however, since the plating layer is removed while the hard material is cut, a basis layer is revealed and the capability of including the cutting material decreases.

Thus, it is necessary to enhance the capability of including the cutting material while the saw wire is in use. In the international patent application WO 90/12670, a saw wire is provided which accompanies the cutting material well. This feature may be accomplished by changing the outer surface of the saw wire. According to an embodiment of the patent application, a number of micro-cavities are allocated on the surface of the saw wire. Also, according to another embodiment of the patent application, the saw wire has a plurality of grooves in a circumferential direction. These solutions may enhance the capability of including the cutting material; however, changing the outer surface of the saw wire generally is costly and time consuming. JP2012139743 is considered to be the prior art closest to the present invention and discloses a saw wire having symmetrical crimps.

### DETAILED DESCRIPTION OF THE INVENTIVE CONCEPT

### TECHNICAL PROBLEM

The inventive concept provides a saw wire having asymmetrical crimps which enhance a feeding capability of a cutting material, improve cutting speed by enhancing the retentiveness of the cutting material, prevent qualitative drop on a cutting surface of a material to-be-cut by smoothly discharging cutting scrap, and reduce a defect rate and thus enhance the productivity of a final product such as a wafer.

### TECHNICAL SOLUTION

According to one or more embodiments of the present invention, the saw wire having asymmetrical crimps includes a saw wire, with continuous crimp formed thereon, wherein asymmetrical unit crimp continuously formed in a zigzag shape includes a first portion and a second portion bent and extended from the first portion with a length longer than that of the first portion, while the length ratio of the first portion and the second portion is 1:1.2 through 1:4.

According to one or more embodiments of the present invention, it is desirable that the slope of the first portion is larger than that of the second portion.

According to one or more embodiments of the present invention, it is desirable that the unit crimp is formed to rotate in one direction when the unit crimp moves in the longitudinal direction of the saw wire.

Additional aspects will be set forth in part in the description which follows and, in part, will be apparent from the description, or may be learned by practice of the presented embodiments.

### ADVANTAGEOUS EFFECTS

According to one or more of the above embodiments of the present invention, the saw wire having asymmetrical crimps may enhance the feeding capability of the cutting material, improve cutting speed by enhancing retentiveness of the cutting material, prevent qualitative drop on the cutting surface of the to-be-cut material by smoothly discharging cutting scrap, and reduce a defect rate and thus enhance the productivity of a final product such as a wafer.

### DESCRIPTION OF THE DRAWINGS

FIG. 1 is a side view of a saw wire having asymmetrical crimps, according to an embodiment of the present invention.
FIG. 2 is an enlarged view of a principle part selected from FIG. 1.
FIG. 3 is a diagram illustrating inclusion of a cutting material when the saw wire in FIG. 1 is used.
FIG. 4 is a conceptual diagram illustrating an oblique view of a saw wire having asymmetrical crimp, according to another embodiment of the present invention.

### BEST MODE

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

The present invention relates to a saw wire which is used in a wire saw machine. The saw wire is used to cut and slice semiconductors, ceramic, super-hard alloys, etc.

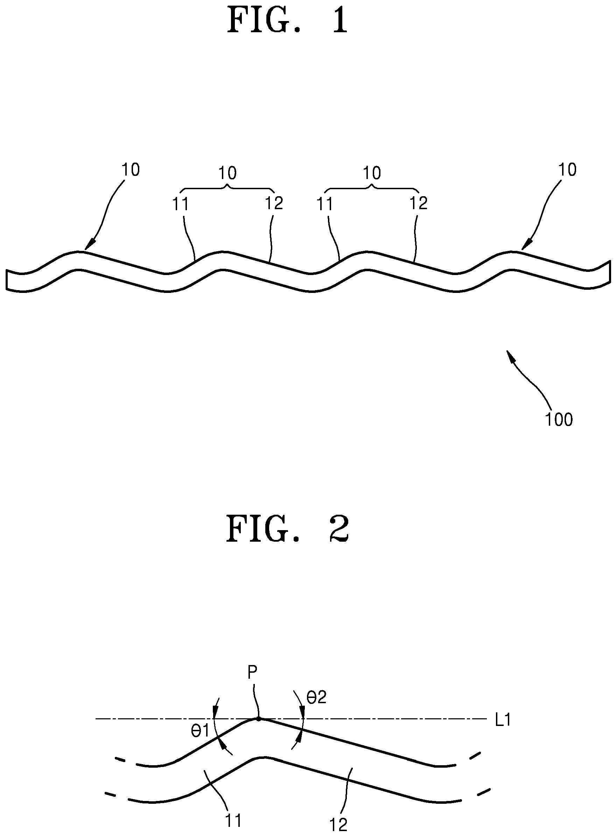

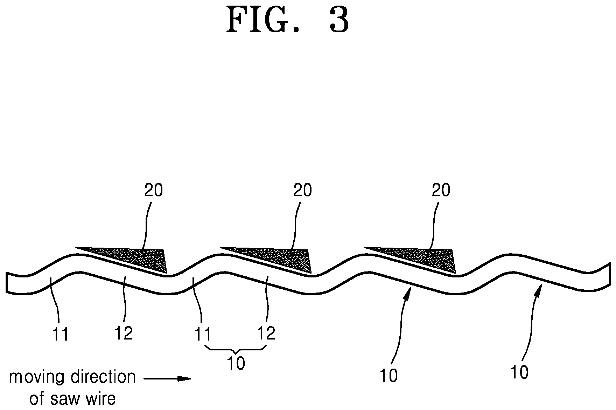

FIG. 1 is a side view of the saw wire 100 having asymmetrical crimps, according to embodiments of the present invention, and FIG. 2 is an enlarged view of a principle part selected from FIG. 1, and FIG. 3 is a diagram illustrating inclusion of a cutting material when the saw wire 100 in FIG. 1 is used.

Referring to FIGS. 1 and 2, the saw wire 100 having asymmetrical crimps, according to an embodiment of the present invention has a unit crimp 10 that is continuously and asymmetrically formed therein.

Specifically, the unit crimp 10 includes a first portion 11 and a second portion 12.

The first portion 11 is shorter than the second portion 12. The second portion 12 is bent and extended from the first portion 11 and has a longer length than the first portion 11. Since lengths of the first portion 11 and the second portion 12 differ, the unit crimp 10 is asymmetrically formed.

The unit crimp 10 is continuously formed in a zigzag shape. According to the present invention, the continuous unit crimp 10 being formed in the saw wire 100 means that the saw wire 100 itself is manufactured to have a zigzag shape.

According to the present invention, the ratio of the length of the first portion 11 to that of the second portion 12 is from 1:1.2 to 1:4.

When the length of the second portion 12 is less than 1.2 times that of the first portion 11, the difference between an area where the second portion 12 and a material to-be-cut contact and an area where the first portion 11 and the to-be-cut material contact may not be sufficiently obtained. Thus, the effect of enhancing the supply amount of the cutting material 20 by causing a difference in contact area may be insignificant.

On the other hand, when the length of the second portion 12 is more than 4 times that of the first portion 11, the length of the first portion 11 may be relatively too small and the crimp effect by may be halved. In other words, the purpose of continuously forming the unit crimp 10 in the saw wire 100 is to smoothly cut the to-be-cut material with the bent unit crimp 10; however, when the length of the second portion 12 exceeds 4 times that of the first portion 11, the crimp function may not be effectively exhibited.

According to an embodiment of the present invention, the slope of the first portion 11 is greater than that of the second portion 12.

In detail, as illustrated in FIG. 2, based on an imaginary line L1 extending in parallel with the longitudinal direction of the saw wire 100, from the peak P where the first portion 11 and the second portion 12 meet, slopes of the first portion 11 and the second portion 12 indicate inclined angles from the imaginary line L1. Thus, the slope of the first portion 11 is θ1 and that of the second portion 12 is θ2. As illustrated in FIG. 2, θ1 is greater than θ2 according to an embodiment of present invention.

FIG. 3 is a diagram illustrating the inclusion of the cutting material 20 when cutting is performed using the saw wire 100, according to an embodiment of the present invention. As illustrated in FIG. 3, the saw wire 100 according to an embodiment of the present invention moves in the right direction and cuts the to-be-cut material, for example, a silicon ingot. As the saw wire 100 moves and applies pressure to the to-be-cut material, the cutting material 20 is provided between the saw wire 100 and the to-be-cut material and a silicon block is cut into wafers. The cutting material 20 is used after conventional mixing of grinding particles, such as silicon carbide powder, diamond powder, etc., with oil, etc. The cutting material 20 may effectively cut the to-be-cut material while contacting the to-be-cut material due to the pressure applied by the saw wire 100.

Referring to FIG. 3 again, according to an embodiment of the present invention, since the length of the second portion 12 is longer than that of the first portion 11, a sufficiently large actual contact area, where the second portion 12 applies pressure to the to-be-cut material, is obtained when the saw wire 100 moves in the right direction. Thus, the amount of cutting material 20 under pressure by the second portion 12 increases.

Also, since the slope of the first portion 11 is greater than that of the second portion 12, cutting scrap, which is generated at the time of cutting the to-be-cut material with the saw wire 100, is swiftly removed. Specifically, since the contact pressure generated by contacting of the first portion 11 and the to-be-cut material relatively and rapidly becomes lower than that generated by contacting of the second portion 12 and the to-be-cut material, cutting scrap may be effectively removed due to decreased contact pressure.

As a result, since the cutting material 20 may sufficiently contact the to-be-cut material due to forming the second portion 12 long, the inclusion or the retentiveness of the cutting material 20 used to cut the to-be-cut material with the saw wire 100 is enhanced, and thus, the cutting speed of the to-be-cut material may be enhanced.

In addition, since the first portion 11, formed to have a shorter length than that of the second portion 12, has a slope that is greater than that of the second portion 12, the contact pressure generated by contacting of the first portion 11 and the to-be-cut material becomes relatively smaller than the contact pressure generated by contacting of the second portion 12 and the to-be-cut material, and thus fast removal of the cutting scrap is induced.

With such operations and effects, the productivity of the final product produced after cutting the to-be-cut material, for example, wafers, may increase and wafer defects such as a saw mark may be reduced.

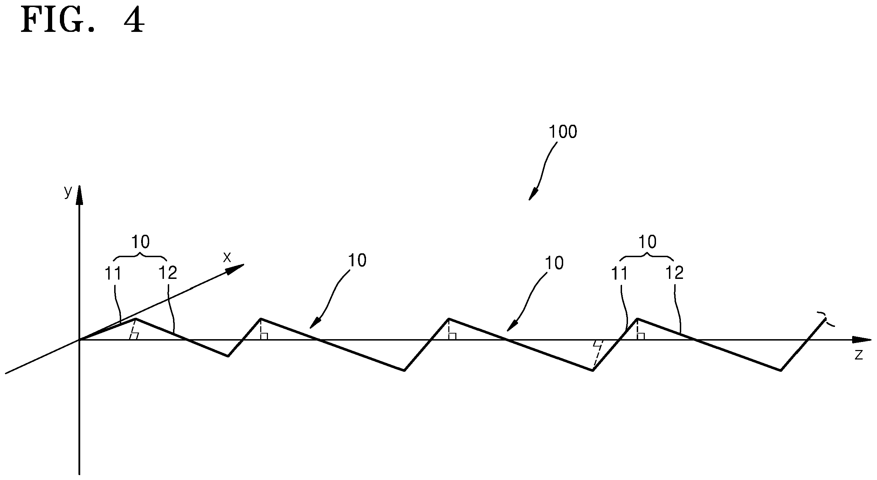

FIG. 4 conceptually illustrates a saw wire 100 having asymmetrical crimps, according to another embodiment of the present invention. In FIG. 4, identical components as in FIG. 1 are assigned identical reference numbers.

As illustrated in FIG. 4, the saw wire 100 having asymmetrical crimps, according to an embodiment of the present invention, has a unit crimp 10 that is formed to rotate in one direction when the unit crimp 10 moves in the longitudinal direction of the saw wire 100.

When the saw wire 100 is seen at the end of Z-axis in FIG. 4 toward the origin, the unit crimp 10 rotates counterclockwise when the unit crimp 10 moves in a longitudinal direction from the origin to the end of Z-axis. Specifically, the unit crimp 10 initially at the origin is formed on the X-Z plane, and the unit crimp 10 formed as a second one immediately following the unit crimp 10 at the origin is on the Y-Z plane. The unit crimp 10 formed as the second one is rotated 90 degrees counterclockwise with respect to the first unit crimp 10.

Subsequently, the third unit crimp 10 is formed again on the X-Z plane. The unit crimp 10 formed as the third one is rotated by 90 degrees more counterclockwise with respect to the second unit crimp 10. Also, the fourth unit crimp 10 is formed on the Y-Z plane. The unit crimp 10 formed as the fourth one is rotated by 90 degrees more counterclockwise with respect to the third unit crimp 10.

According to an embodiment of the present invention, by forming the saw wire 100 in a state similar to that of FIG. 1 and twisting and rotating the saw wire 100 formed as shown in FIG. 1, the unit crimp 10 may be formed to have a rotatable shape.

FIG. 4 illustrates a simplified drawing for easy understanding of the rotation of the unit crimp 10 in one direction. In other words, according to FIG. 4, the unit crimp 10 is illustrated to be alternately located on the X-Z plane and the Y-Z plane; however, planes where the unit crimp 10 is formed are not limited thereto.

When the unit crimp 10 is realized to rotate with the saw wire 100 by twisting in one direction and rotating the saw wire 100 in FIG. 1, the unit crimp 10 practically forms a helix as the unit crimp 10 moves in the longitudinal direction of the saw wire 100. In other words, the trajectory of the peak, where the first portion 11 and the second portion 12 meet, forms a helix.

According to an embodiment of the present invention, as well as the effect provided by embodiments in FIG.1, the feeding and removal capabilities of the cutting material 20 are also enhanced over the embodiment of FIG. 1, and the one-sided wear of the saw wire 100 is reduced.

As described above, according to the one or more of the above embodiments of the present invention, the saw wire having asymmetrical crimps may enhance the feeding capability of the cutting material, improve cutting speed by enhancing retentiveness of the cutting material, prevent qualitative drop on the cutting surface of the to-be-cut material by smoothly discharging cutting scrap, and reduce a defect rate and thus enhance the productivity of a final product such as a wafer.

It should be understood that the exemplary embodiments described herein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the scope of the present invention as defined by the following claims.

## Claims

1. A saw wire (100) having asymmetrical crimps, the saw wire comprising an asymmetrical unit crimp (10) that is continuously formed in a zigzag shape, wherein the asymmetrical unit crimp comprises a first portion (11) and a second portion (12) which is bent and extended from the first portion and is longer than the first portion, and a length ratio of the first portion to the second portion is from 1:1.2 to 1:4.

2. The saw wire (100) having asymmetrical crimp (10) of claim 1, wherein a slope of the first portion (11) is greater than that of the second portion (12).

3. The saw wire (100) having asymmetrical crimp (10) of claim 1, wherein the asymmetrical unit crimp is formed to rotate in one direction when the unit crimp moves in the longitudinal direction of the saw wire.

## Patentansprüche

1. Ein Sägedraht (100) mit asymetrischen Kräuselungen, der Sägedraht umfasst eine asymetrische Kräuseleinheit (10), die kontinuierlich in einer Zickzack-Form ausgebildet ist, wobei die asymetrische Kräuseleinheit einen ersten Teil (11) und einen zweiten Teil (12) umfasst, welcher gebogen ist und sich von dem ersten Teil erstreckt und länger als der erste Teil ist und ein Längenverhältnis des ersten Teils zum zweiten Teil zwischen 1:1.2 und 1:4 hat.

2. Der Sägedraht (100) mit asymetrischer Kräuselung (10) von Patentanspruch 1, wobei eine Neigung des ersten Teils (11) größer ist als die des zweiten Teils (12).

3. Der Sägedraht (100) mit asymetrischer Kräuselung (10) von Patentanspruch 1, wobei die asymetrische Kräuseleinheit so geformt ist, dass sie sich in eine Richtung dreht, wenn sich die Kräuseleinheit in Längsrichtung des Sägedrahtes bewegt.

## Revendications

1. Fil de scie (100) ayant des ondulations asymétriques, le fil de scie comprenant une ondulation unitaire asymétrique (10) qui est formée en continu sous une forme en zigzag, dans lequel l'ondulation unitaire asymétrique comprend une première portion (11) et une seconde portion (12) qui est courbée et étendue à partir de la première portion et est plus longue que la première portion, et un rapport de longueur entre la première portion et la seconde portion est de 1:1,2 à 1:4.

2. Fil de scie (100) ayant une ondulation asymétrique (10) selon la revendication 1, dans lequel une pente de la première portion (11) est plus importante que celle de la seconde portion (12).

3. Fil de scie (100) ayant une ondulation asymétrique (10) selon la revendication 1, dans lequel l'ondulation unitaire asymétrique est formée pour une mise en rotation dans une direction lorsque l'ondulation unitaire se déplace dans la direction longitudinale du fil de scie.
